# EUROPÄISCHE PATENTANMELDUNG

(11) **EP 0 985 444 A1**
(43) Veröffentlichungstag der Anmeldung: **15.03.2000**
(21) Anmeldenummer: 99115768.6
(22) Anmeldetag: 10.08.1999
(51) Int. Cl.: B01F 7/18, B01F 13/10, B01F 3/04

(54) **Verfahren und Vorrichtung zum Mischen von Produkten**

(30) Priorität: 12.08.1998 DE 19836565
(71) Anmelder: Linde Aktiengesellschaft, 65189 Wiesbaden (DE)
(72) Erfinder: Garnreiter, Franz, Dipl.-Ing. (FH), 83502 Bruckmühl (DE)

(57) **Zusammenfassung**

Es werden ein Verfahren und eine Vorrichtung zum Mischen von Produkten (7) in einem Mischbehälter (1) vorgeschlagen, der eine Mischeinrichtung (2) zum Umwälzen der Produkte (7) aufweist. Um die Durchmischung der Produkte (7) im Mischbehälter (1) zu verbessern, wird Gas (11) in die Produkte (7) eingetragen, so daß die Umwälzbewegung der Produkte (7) gestört wird. Insbesondere bei flüssigen oder zähflüssigen Produkten (7) wird durch die aufgrund des Gaseintrags (11) bewirkte Strömungsstörung ein wesentlich höherer Mischeffekt erreicht. Beim Einmischen eines Kühlmittels in das Produkt wird aufgrund des Gaseintrags (11) die Kühlwirkung wesentlich verbessert.

## Beschreibung

Die Erfindung betrifft ein Verfahren zum Mischen von Produkten in einem Mischbehälter, bei dem das Produkt mittels einer Mischeinrichtung in Bewegung versetzt wird, sowie eine Vorrichtung zur Durchführung des Verfahrens.

In der Lebensmitteltechnik sind Verfahren und Einrichtungen zum Mischen und Mengen von Produkten weit verbreitet. Beispielsweise werden häufig Rohstoffe der Nahrungsmittelindustrie gemischt, um sie dann einer weiteren Verarbeitung zuzuführen. Die zu mischenden Stoffe können dabei fest, flüssig oder zähflüssig sein. Mischer oder Menger werden beispielsweise zur schonenden Fleischverarbeitung oder zum Einmischen von Zuschlagstoffen in Lebensmittel eingesetzt. Es hat sich jedoch herausgestellt, daß insbesondere bei flüssigen Produkten nur ein ungenügender Mischeffekt eintritt. Um eine bessere Durchmischung von Produkten in Mischbehältern zu erreichen, wird häufig versucht, die Mischeinrichtung bei höheren Drehzahlen zu betreiben. Insbesondere in der Lebensmitteltechnik ist dies allerdings nicht immer möglich, da in der Regel nur mit produktangepaßten niedrigen Drehzahlen gearbeitet werden darf, um die Konsistenz des Produkts nicht zu beeinträchtigen. Bei zu hohen Drehzahlen kann es zu unerwünschtem Absetzen von Produktbestandteilen oder zum Zersetzen der Emulsion kommen. Auch beim Kühlen von flüssigen Lebensmitteln, z.B. heißen Saucen, werden Mischeinrichtungen eingesetzt, wobei eine Kühlflüssigkeit, z.B. flüssiger Stickstoff, mit dem flüssigen Lebensmittel vermischt wird. Für eine gute Kühlwirkung ist ebenfalls eine effektive Durchmischung der flüssigen Produkte im Mischbehälter erforderlich. Die heißen Produkte sollen schließlich innerhalb der gewünschten kurzen Zeit von z.B. +90°C durch Einmischen von flüssigem Stickstoff auf z.B. +5°C abgekühlt werden.

Der vorliegenden Erfindung liegt die Aufgabe zugrunde, ein Verfahren und eine Vorrichtung zum Mischen von Produkten in einem Mischbehälter zur Verfügung zu stellen, die ein effektives Mischen auch von flüssigen oder zähflüssigen Produkten ermöglichen.

Diese Aufgabe wird verfahrensseitig erfindungsgemäß dadurch gelöst, daß die Bewegung der Produkte im Mischbehälter durch Eintrag von Gas beeinflußt wird.

Die Produkte können dabei fest, flüssig oder zähflüssig sein, wobei flüssige oder zähflüssige Produkte sowie rieselfähige Produkte mit flüssigkeitsähnlichem Strömungsverhalten bevorzugt werden. Diesen Produkten wird mittels der Mischeinrichtung eine Strömung aufgezwungen, die erfindungsgemäß durch Eintrag von Gas beeinflußt wird. Auf diese Weise wird die Durchmischung der Produkte und bei Zugabe eines Kühlmittels auch die Kühlung der Produkte wesentlich verbessert.

Bei Versuchen hat sich herausgestellt, daß in einem Mischbehälter befindliches Wasser in vertikaler Stellung des Behälters mittels eines im Mischbehälter installierten Rührwerks mit vertikaler Achse im wesentlichen nur umgewälzt wurde, ohne eine nennenswerte Durchmischung zu bewirken. Bei Zufuhr von flüssigem Stickstoff auf das Wasser konnte deshalb nur ein sehr langsames Abkühlen erreicht werden.

Darüber hinaus wurde festgestellt, daß sich bei Trombenbildung in der Flüssigkeit flüssiger Stickstoff in der Trombe sammeln kann und zur Ausbildung einer unerwünschten Eisschicht auf der Produktoberfläche führen kann.

Es wurde nun gefunden, daß durch den Eintrag eines Gases in das zu mischende Produkt, die Bewegung der Produkte im Mischbehälter so gestört werden kann, daß es nicht nur zu einem Umwälzen des Produkts, sondern zu einer intensiven Durchmischung kommt. Insbesondere bei flüssigen Produkten kann durch den Eintrag eines Gases die Strömung der Flüssigkeit so beeinflußt werden, daß die Flüssigkeit wirkungsvoll durchmischt wird.

Aus der Rührtechnik (z.B. bei Fermentern) ist zwar schon der Einbau von mechanischen Stromstörern bekannt, um die Durchmischung von Produkten zu verbessern. Bei dieser Methode besteht allerdings der Nachteil, daß sich fest installierte Teile im Mischbehälter befinden, die den für das Rührwerk zur Verfügung stehenden Raum einschränken. Außerdem muß bei dieser Ausführung auf einen Abstreifer am Mischarm des Rührwerks verzichtet werden. Darüber hinaus besteht beim Eintrag von flüssigem Stickstoff die Gefahr des Vereisens der zusätzlichen Einbauten.

Mit der erfindungsgemäßen berührungslosen Beeinflussung der Strömung der Produkte im Behälter können diese Nachteile auf elegante Weise vermieden werden und es wird trotzdem eine effektive Durchmischung der Produkte und ggf. Kühlung der Produkte erreicht.

Dabei kann das Gas von oben in das Produkt im Behälter, von unten oder von der Seite, in Kombination der genannten Stellen oder auch über die Mischeinrichtung zugeführt werden. Gasart, Gasmenge und Gastemperatur sowie Gasblasengröße können spezifisch auf die Produkterfordernisse eingestellt werden. Sollte eine unerwünschte Gaslösung stattgefunden haben oder noch Gasblasen im abgekühlten Produkt vorhanden sein, so kann durch Anlegen von Vakuum eine Entgasung vorgenommen werden. Als Gase können die im Kontakt mit Lebensmitteln üblicherweise eingesetzten Gase, z.B. gasförmiger Stickstoff oder gasförmiges Kohlendioxid, verwendet werden.

Die Erfindung betrifft ferner eine Vorrichtung zum Mischen von Produkten mit einem Mischbehälter, der eine Mischeinrichtung aufweist.

Erfindungsgemäß wird die gestellte Aufgabe vorrichtungsseitig dadurch gelöst, daß in den für das zu mischende Produkt vorgesehenen Bereich des Mischbehälters mindestens eine Zuführung für ein Gas mündet.

Dabei kann die Zuführung für das Gas von oben und/oder von unten und/oder von der Seite in den Mischbehälter münden. Gemäß einer Weiterbildung des Erfindungsgedankens ist die Zuführung für das Gas in die Mischeinrichtung integriert.

Mit der Erfindung sind eine Reihe von Vorteilen verbunden:

Aufgrund der spezifischen Gasdosierung kann individuell auf die Produkterfordernisse eingewirkt werden. Da mit niedrigeren Drehzahlen der Mischeinrichtung gearbeitet werden kann, ist eine schonendere Produktbehandlung bei gleichzeitig guter Umwälzung der Produkte gewährleistet. Darüber hinaus wird eine größere Produktoberfläche für die Kühlung geschaffen. Eine Trombenbildung wird mit der Erfindung vermieden. Durch die Verwendung von Kaltgas zur Störung der Strömung wird eine zusätzliche Kühlwirkung erreicht.

Die Erfindung eignet sich besonders gut zum Mischen und Kühlen von Lebensmittelprodukten, insbesondere flüssigen oder zähflüssigen Produkten oder auch Produkten, welche aufgrund ihrer rieselfähigen Struktur (z.B. Pellets) flüssigkeitsähnliches Strömungsverhalten zeigen. Beispielsweise ist die Erfindung zum Kühlen von heißen Saucen durch Einmischen von flüssigem Stickstoff geeignet.

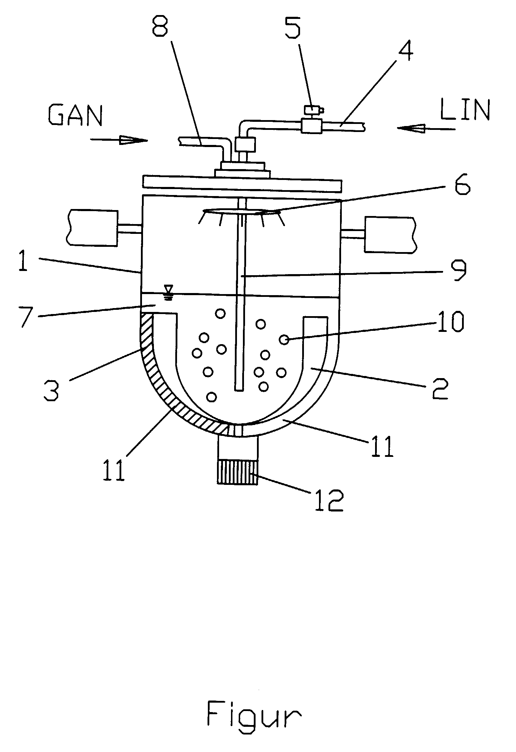

Im folgenden wird die Erfindung anhand eines in der Figur schematisch dargestellten Ausführungsbeispiels näher erläutert:

In einem Mischbehälter 1 ist ein Rührwerk 2 installiert, das einen Abstreifer 3 aufweist. Das Rührwerk 2 wird mittels eines Motors 12 angetrieben. Über eine Flüssigstickstoffzuleitung 4 und ein Absperrventil 5 wird flüssiger Stickstoff in den Mischbehälter 1 eingetragen. Der flüssige Stickstoff wird mittels Flüssigstickstoffdüsen 6 auf das im Mischbehälter 1 befindliche Produkt 7, z.B. eine heiße Sauce, aufgesprüht. Mittels des Rührwerks 2 wird das Produkt 7 im Mischbehälter 1 umgewälzt, wobei der flüssige Stickstoff in das Produkt 7 eingemischt wird, um das Produkt 7 abzukühlen. Um eine bessere Durchmischung des Produkts 7 mit dem flüssigen Stickstoff und damit eine bessere Kühlwirkung zu erreichen, wird über eine Zuführung 8 gasförmiger Stickstoff einem im Mischbehälter 1 angeordneten perforierten Rohr 9 zugeführt. Das perforierte Rohr 9 taucht in die im Mischbehälter 1 befindlichen Produkte 7 ein. Der gasförmige Stickstoff tritt über die Löcher in der Seitenwand des Rohres 9 aus und bildet im Produkt 7 Gasblasen 10. Außerdem wird über in den unteren Teilen des Mischbehälters 1 mündende Gaszuführungen 11 zusätzlich gasförmiger Stickstoff in das Produkt 7 eingetragen. Die aufgrund des Gaseintrags im Produkt 7 entstehenden Gasblasen 10 wirken als Strömungsstörer und verbessem die Durchmischung des Produkts 7 mit dem flüssigen Stickstoff wesentlich. Dadurch wird eine sehr viel kürzere Abkühlzeit erreicht.

## Patentansprüche

1. Verfahren zum Mischen von Produkten (7) in einem Mischbehälter (1), bei dem die Produkte (7) mittels einer Mischeinrichtung (2) in Bewegung versetzt werden, **dadurch gekennzeichnet**, daß die Bewegung der Produkte (7) durch Eintrag von Gas (11) beeinflußt wird.

2. Verfahren nach Anspruch 1, wobei als Produkte (7) flüssige oder zähflüssige Produkte verwendet werden und in dem Mischbehälter (1) mittels der Mischeinrichtung (2) eine Strömung hergestellt wird, **dadurch gekennzeichnet**, daß die Strömung durch Eintrag des Gases (11) beeinflußt wird.

3. Verfahren nach Anspruch 1 oder 2, **dadurch gekennzeichnet**, daß das Gas von oben und/oder von unten und/oder von der Seite in die im Mischbehälter (1) befindlichen Produkte (7) eingetragen wird.

4. Verfahren nach einem der Ansprüche 1 bis 3, **dadurch gekennzeichnet**, daß das Gas über die Mischeinrichtung (2) in die Produkte (7) eingetragen wird.

5. Verfahren nach einem der Ansprüche 1 bis 4, **dadurch gekennzeichnet**, daß Gasart und/oder Gasmenge und/oder Gastemperatur und/oder Gasblasengröße spezifisch auf die Produkterfordernisse eingestellt werden.

6. Verfahren nach einem der Ansprüche 1 bis 5, **dadurch gekennzeichnet**, daß der Mischbehälter (1) evakuiert wird.

7. Verfahren nach einem der Ansprüche 1 bis 6, **dadurch gekennzeichnet**, daß ein Kaltgas, insbesondere verdampftes bzw. verdampfendes Flüssiggas, in das Produkt eingetragen wird.

8. Vorrichtung zum Mischen von Produkten (7) mit einem Mischbehälter (1), der eine Mischeinrichtung (2) aufweist, **dadurch gekennzeichnet**, daß in den für das zu mischende Produkt (7) vorgesehenen Bereich des Mischbehälters (1) mindestens eine Zufuhr (11) für ein Gas mündet.

9. Vorrichtung nach Anspruch 8, **dadurch gekennzeichnet**, daß die Zufuhr (11) für das Gas von oben und/oder von unten und/oder von der Seite in den für das zu mischende Produkt (7) vorgesehenen Bereich des Mischbehälters (1) mündet.

10. Vorrichtung nach Anspruch 8 oder 9, **dadurch gekennzeichnet**, daß die Zufuhr für das Gas in die Mischeinrichtung (2) integriert ist.
